# EUROPÄISCHE PATENTANMELDUNG

(11) **EP 1 006 048 A2**
(43) Veröffentlichungstag der Anmeldung: **07.06.2000**
(21) Anmeldenummer: 99123256.2
(22) Anmeldetag: 29.11.1999
(51) Int. Cl.: B64D 25/10

(54) **Verfahren zur Rettung von Personen aus Luftnot mittels eines Schleudersitzes**

(30) Priorität: 01.12.1998 DE 19855261
(71) Anmelder: Autoflug GmbH & Co, D-25462 Rellingen (DE)
(72) Erfinder: Hansen, Holger, 20357 Hamburg (DE); Sedlmayer, Andreas, 22549 Hamburg (DE); Paulgerg von, Heinrich, 82237 Wörthsee (DE)
(74) Vertreter: Müller, Karl-Ernst, Dr., Dipl.-Ing.

(57) **Zusammenfassung**

Zur Verbesserung eines Verfahrens zur Rettung einer auf einem im Notfall aus einem Flugzeug ausgestoßenen Schleudersitz sitzenden Person, wobei in Abhängigkeit von mittels am Schleudersitz angeordneter Meßvorrichtungen erfaßten Daten von einer Steuereinrichtung das Entfalten von am Schleudersitz angebrachten Stabilisierungs- und/oder Bremsschirmen sowie eine Trennung der Person vom Schleudersitz eingeleitet wird, ist vorgesehen, daß während der zwischen Flugzeug und Schleudersitz bestehenden Verbindung die aktuellen Flugdaten des Flugzeuges über einen Datenbus in einen am Schleudersitz befindlichen Schleudersitz-Rechner eingespeist und nach der Trennung des Schleudersitzes vom Flugzeug von einer am Schleudersitz angebrachten Navigationsplattform die Bewegungsdaten des Schleudersitzes im Luftraum erfaßt und dem Schleudersitz-Rechner zugeleitet werden, und daß in dem Schleudersitz-Rechner ausgehend von den Fluglage-Daten des Flugzeuges zum Zeitpunkt der Trennung des Schleudersitzes die Flugdaten des Schleudersitzes berechnet und bei Erreichen vorgegebener Grenzwerte die Entfaltung der Stabilisierungs- und/oder der Bremsschirme und/oder die Sitz/Mann-Trennung eingeleitet wird.

## Beschreibung

Die Erfindung betrifft ein Verfahren zur Rettung einer auf einem im Notfall aus einem Flugzeug ausgestoßenen Schleudersitz sitzenden Person, wobei in Abhängigkeit von mittels am Schleudersitz angeordneter Meßvorrichtungen erfaßten Daten von einer Steuereinrichtung das Entfalten von am Schleudersitz angebrachten Stabilisierungs- und/oder Bremsschirmen sowie eine Trennung der Person vom Schleudersitz eingeleitet wird.

Zum Stand der Technik zählende Schleudersitze werden hinsichtlich des Ausstoßes von Stabilisierungs- bzw. Bremsschirmen wie auch hinsichtlich der Trennung der auf dem Schleudersitz sitzenden Person von dem Schleudersitz über mechanisch arbeitende Automaten wie barometrisch gesteuerte Uhrzeitwerke gesteuert, indem nach der Trennung des Schleudersitzes vom Flugzeug die Rettungssequenz mit den aufeinanderfolgenden Stufen einer Entfaltung von Stabilisierungsschirmen und/oder Bremsschirmen und/oder Sitz/Mann-Trennung nach festgelegten Zeitabschnitten und in Abhängigkeit von dem festgestellten barometrischen Luftdruck als Maß für die jeweilige Höhe des Schleudersitzes durchgeführt wird.

Mit einem derartigen Verfahrensablauf ist der Nachteil verbunden, daß die Entfaltung der Stabilisierungs- bzw. Bremsschirme sowie die Trennung der Person vom Schleudersitz ohne Berücksichtigung der jeweils aktuellen Flugbewegung des Schleudersitzes erfolgt, da allein die seit der Trennung des Schleudersitzes vom Flugzeug verstrichene Zeit bzw. die Änderung des Luftdrucks als Steuergrößen zur Verfügung stehen. Damit ist für die Einleitung und den Ablauf der Rettungssequenz nicht zu berücksichtigen, ob sich das Flugzeug zum Zeitpunkt des Ausstoßes des Schleudersitzes beispielsweise in gebirgigem Gelände in vergleichsweise niedriger Höhe über dem Erdboden befand oder ob der Ausstoß des Schleudersitzes etwa während einer Rückenfluglage des Flugzeuges in Richtung auf den Erdbogen erfolgt ist; in beiden Fällen kann die Einleitung der verschiedenen Stufen der Rettungssequenz allein aufgrund der Zeit- und/oder barometrischen Steuerung zu falschen Auslösezeitpunkten führen, die mit einer entsprechend hohen Gefährdung der auf dem Schleudersitz befindlichen Person verbunden sind. Es bleibt ferner in nachteiliger Weise die aktuelle Geschwindigkeit des Schleudersitzes für die Auslösung der Entfaltung der entsprechenden Schirme unberücksichtigt, so daß im Einzelfall die Schirme beispielsweise zu früh mit dem Risiko einer Beschädigung oder auch zu spät geöffnet werden, womit der Erfolg der Rettungsmaßnahme in Frage gestellt wird.

Eine Weiterentwicklung eines derartigen Schleudersitzes umfaßt dessen Ausrüstung mit einem Staudruckmeßrohr, mittels dessen über die Änderung des Staudruckes Rückschlüsse auf die negative Beschleunigung, d. h. die Verzögerung der Bewegung des Schleudersitzes möglich sind, so daß Zeitvorgaben für die Auslösung der einzelnen Stufen der Rettungssequenz zuordnenbar sind. Dabei sind in der die Rettungsseguenz steuernden Steuereinrichtung drei anzusteuernde Zeitebenen eingestellt, die auf den Kombinationen große Höhe/niedrige Geschwindigkeit, geringe Höhe/hohe Geschwindigkeit sowie Stand des Flugzeuges auf dem Boden (keine Höhe/keine Geschwindigkeit) beruhen. Im Rahmen jeder Alternative ist ein Zeitfenster für den Ablauf der Rettungssequenz eingestellt, so daß wiederum eine Anpassung an eine aktuelle Bewegung des Schleudersitzes im Raum nicht gegeben ist.

Somit ist den bekannten Schleudersitzen und den daraus resultierenden Rettungssequenzen generell der Nachteil zu eigen, daß die Erfassung von Meßgrößen und eine damit mögliche, allerdings nur sehr vereinfachte Steuerung der Rettungssequenz erst nach dem Ausschuß des Schleudersitzes aus dem Flugzeug beginnt; beispielsweise beträgt der Zeitraum vom Ausschuß bis zu einer ersten möglichen Entfaltung eines Stabilisierungs- oder Bremsschirmes wenigstens zwei Sekunden, so daß bis zu einem möglichen Beginn einer Abfolge von Rettungsmaßnahmen kostbare Zeit verstreicht, die insbesondere bei ungünstigen Ausschußbedingungen für die Rettung der auf dem Schleudersitz sitzenden Person fehlt.

Der Erfindung liegt daher die Aufgabe zugrunde, ein Verfahren der eingangs genannten Art derart zu verbessern, daß die Rettungssequenz den tatsächlichen Flugverhältnissen besser angepaßt und die Gefährdung der auf dem Schleudersitz sitzenden Person verringert ist.

Die Lösung dieser Aufgabe ergibt sich einschließlich vorteilhafter Ausgestaltungen und Weiterbildungen der Erfindung aus dem Inhalt der Patentansprüche, welche dieser Beschreibung nachgestellt sind.

Die Erfindung sieht in ihrem Grundgedanken vor, daß während des Fluges, somit während der zwischen Flugzeug und Schleudersitz bestehenden Verbindung die aktuellen Flugdaten des Flugzeuges über einen Datenbus in einen am Schleudersitz befindlichen Schleudersitz-Rechner eingespeist und nach der Trennung des Schleudersitzes vom Flugzeug von einer am Schleudersitz angebrachten Navigationsplattform die Bewegungsdaten des Schleudersitzes im Luftraum erfaßt und dem Schleudersitz-Rechner zugeleitet werden, und daß in dem Schleudersitz-Rechner ausgehend von den Fluglage-Daten des Flugzeuges zum Zeitpunkt der Trennung des Schleudersitzes die relevanten Flugdaten des Schleudersitzes berechnet und bei Erreichen vorgegebener Grenzwerte die Entfaltung der Stabilisierungs- und/oder der Bremsschirme und/oder die Sitz/Mann-Trennung eingeleitet wird.

Damit beruht die Erfindung auf dem Grundgedanken, den Schleudersitz nach seiner Trennung von dem Flugzeug als eigenständigen Flugkörper zu begreifen, dessen Lage und Bewegung im Raum auf der Basis der zum Zeitpunkt der Trennung des Schleudersitzes vom Flugzeug geltenden Flugdaten des Flugzeuges als Grunddaten ermittelt wird, so daß jeweils der aktuelle Bewegungszustand des Schleudersitzes für die Steuerung der einzelnen Stufen der Rettungssequenz maßgeblich ist. Im Gegensatz zu den zum Stand der Technik zählenden Schleudersitzen, die nur eine zeitlich spätere Reaktion auf die Bedingungen beim Ausschuß ermöglichen, erlauben die in den Schleudersitz-Rechner eingespeisten Flugdaten des Flugzeuges eine vorausschauende Ansteuerung der Rettungssequenz insoweit, als zu jedem Zeitpunkt des Fluges des Flugzeuges mögliche reale Ausschußparameter in dem Schleudersitz-Rechner verfügbar sind, die in Abhängigkeit von dem Flugverhalten des Flugzeuges vor einem eventuellen Ausschuß des Schleudersitzes ständig aktualisiert werden. Damit kann die Steuerung einer Rettungssequenz im Notfall unmittelbar mit dem Ausschuß des Schleudersitzes einsetzen, so daß selbst ungünstigsten Ausschußbedingungen praktisch verzögerungsfrei durch eine entsprechende Steuerung der Rettungssequenz Sorge getragen werden kann.

So ist mit der Erfindung der Vorteil verbunden, daß der Zeitpunkt für die Entfaltung beispielsweise eines ersten Stabilisierungsschirmes bei Erreichen einer dafür optimalen Geschwindigkeit von der vom Schleudersitz-Rechner gesteuerten Steuereinrichtung des Schleudersitzes vorgebbar ist; Abweichungen von diesem Zeitpunkt können sich dann ergeben, wenn sich das Flugzeug zum Zeitpunkt des Ausstoßes des Schleudersitzes beispielsweise in einer Rückenfluglage befand, so daß der Ausstoß des Schleudersitzes in Richtung des Erdbodens erfolgt. Eine solche Fluglage kann in Abhängigkeit von der ebenfalls als Echtdaten zur Verfügung stehenden Flughöhe über dem Erdboden trotz einer noch zu hohen Geschwindigkeit des Schleudersitzes eine sehr viel frühere Entfaltung des ersten Stabilisierungsschirmes erfordern, als sich dies allein aus der Feststellung einer optimalen Geschwindigkeit ergibt; ähnliches gilt für eine Fluglage des Flugzeuges beispielsweise in einer Kurvenlage mit einem Ausstoß des Schleudersitzes zur Seite. Entsprechendes gilt ferner für die weiteren Stufen der Rettungssequenz wie die Entfaltung weiterer Stabilisierungs- und/oder Bremsschirme sowie die Trennung der Person vom Schleudersitz, die ebenfalls bei einer optimalen Geschwindigkeit oder auch barometrischen Höhe über Normal-Null bzw. in Abhängigkeit von der Höhe des Schleudersitzes über dem Erdboden bzw. von dessen Lage im Raum und deren Veränderung auslösbar sind. Da hierfür auch die Windgeschwindigkeit als äußerer Einflußgröße maßgeblich sein kann, ist nach einem Ausführungsbeispiel der Erfindung vorgesehen, daß die Windgeschwindigkeit jeweils erfaßt und in dem Schleudersitz-Rechner übertragen wird.

Soweit nach einem Ausführungsbeispiel der Erfindung vorgesehen ist, daß während des Fluges des Schleudersitzes die Umgebungstemperatur erfaßt und die gemessenen Temperaturwerte dem Schleudersitz-Rechner zugeleitet und bei der Steuerung der Rettungssequenz berücksichtigt werden, ist damit der Vorteil verbunden, daß beispielsweise bei einem Ausstieg in großer Höhe und damit entsprechend tiefer Umgebungstemperatur die ungebremste Flugphase des Schleudersitzes verlängert werden kann, bis wärmere Luftschichten erreicht sind, um die auf dem Schleudersitz sitzende Person nur möglichst kurzzeitig entsprechender Kälte auszusetzen. Das gleiche gilt für bei einem Ausstieg in großer Höhe gegebenen Sauerstoffmangel insoweit, als nach einem Ausführungsbeispiel der Erfindung auch während des Fluges des Schleudersitzes der Sauerstoffgehalt erfaßt wird, so daß auch in einem solchen Fall die Flugphase des Schleudersitzes so gesteuert wird, daß die auf ihm sitzende Person möglichst schnell Luftschichten mit einem ausreichenden Sauerstoffgehalt erreicht.

In gleicher Weise kann die Steuerung auch dafür eingerichtet sein, generell die Absetzzeit der zu rettenden Person nach deren Trennung vom Schleudersitz möglichst gering zu halten, um im Falle einer Feindeinwirkung einen während einer längeren Fallschirm-Flugphase drohenden Beschuß zu vermeiden. Einer solchen Zielsetzung kann durch eine überlagerte Zeitsteuerung Rechnung getragen werden.

Soweit nach einem Ausführungsbeispiel der Erfindung vorgesehen ist, daß die im Rechner des Flugzeuges vorgehaltenen, das geografische Fluggebiet betreffenden Kartendaten in den Schleudersitz-Rechner eingespeist und bei der Berechnung des Zeitpunktes für die Entfaltung der Stabilisierungs- und/oder der Bremsschirme und/oder der Sitz/Mann-Trennung berücksichtigt werden, ergibt sich daraus der Vorteil, daß der Zeitpunkt für die Auslösung der einzelnen Stufen der Rettungssequenz auch in Abhängigkeit von den geografischen Daten von der Steuereinrichtung des Schleudersitzes vorgebbar ist, insoweit beispielsweise bei Ausstoß des Schleudersitzes über einem See bzw. flachem Gelände mehr Zeit für die Abwicklung der Rettungssequenz zur Verfügung steht als in gebirgigem Gelände mit im Vergleich zur Flugbewegung des Schleudersitzes herannahenden Höhenzügen. In diesem Zusammenhang kann es nach einem Ausführungsbeispiel der Erfindung zweckmäßig sein, als Flugdaten des Flugzeuges dessen Geschwindigkeit über Boden in den Schleudersitz-Rechner einzuspeisen, weil erfahrungsgemäß die Geschwindigkeit des Flugzeuges in der Luft und dessen relative Geschwindigkeit im Verhältnis zum Boden aufgrund von Windströmungen unterschiedlich sein kann. Kommen somit Kartendaten zur Vorausberechnung der Flugbahn des Schleudersitzes zum Tragen, muß die Geschwindigkeit des Flugzeuges über Boden zur Verfügung stehen, um die geografische Lage bzw. Lageveränderung des Schleudersitzes bestimmen zu können.

Nach einem Ausführungsbeispiel der Erfindung ist vorgesehen, daß der Schleudersitz-Rechner in Abhängigkeit von den in ihm vorliegenden Flugdaten des Flugzeuges den Ausschuß des Schleudersitzes nach Stärke des Ausschußimpulses und/oder nach Richtung des Ausschusses steuert. Damit ist in vorteilhafter Weise die Möglichkeit gegeben, daß der Schleudersitz-Rechner bei einem sich aus den Flugdaten des Flugzeuges ergebenden oder aber auch von dem Piloten angesteuerten Ausschuß des Schleudersitzes die Bedingungen dieses Ausschusses in Abhängigkeit von den Flugdaten des Flugzeuges festlegt. So kann der Ausschuß mit unterschiedlicher Beschleunigung des Schleudersitzes herbeigeführt werden, je nachdem, in welcher Höhe sich beispielsweise das Flugzeug befindet und ob beim Ausschuß noch Höhe gewonnen werden muß. Dagegen ist beim bereits angesprochenen Rückenflug des Flugzeuges kein starker Ausschußimpuls erforderlich. Gleiches gilt auch für die Richtung des Ausschusses insoweit, als beispielsweise unmittelbar nach dem Ausschuß eine gegebenenfalls vorgesehene Schubrakete gezündet wird, um die Richtung des Schleudersitzes zu bestimmen und ihm somit eine vom Schleudersitz-Rechner ermittelte Anfangsflugbahn zu geben.

Soweit zusätzlich vorgesehen sein kann, daß die Flugbahn des Schleudersitzes im Raum auf der Basis der aus dem Flugzeug übernommenen Flugdaten des Flugzeuges und der von der Navigationsplattform ermittelten Daten vorausberechnet und der Zeitpunkt für die Entfaltung der Stabilisierungs- und/oder der Bremsschirme und/oder der Sitz/Mann-Trennung berechnet wird, ergibt sich daraus die Möglichkeit, daß in Abhängigkeit von den vom Schleudersitz-Rechner berechneten Flugdaten des Schleudersitzes über an dem Schleudersitz angebrachte Antriebssysteme eine Korrektur der Flugbahn des Schleudersitzes vorgenommen wird. Damit ist es beispielsweise möglich, bei einem unter sehr ungünstigen Verhältnissen erfolgenden Ausstoß des Schleudersitzes aus dem Flugzeug dem Schleudersitz noch eine größere Höhe und/oder andere Flugbahn zu vermitteln, als sich diese ohne eine entsprechende Korrektur einstellen würde.

Ein zur Durchführung der Rettungssequenz eingerichteter Schleudersitz ist mit einem Schleudersitz-Rechner versehen und weist während seiner Verbindung mit dem Flugzeug einen an den Flugrechner angeschlossenen Datenbus sowie eine Navigationsplattform auf, die nach einem Ausführungsbeispiel der Erfindung als inertiale Meßeinrichtung ausgebildet ist. Der Schleudersitz kann ferner nach einem Ausführungsbeispiel der Erfindung Schubdüsen zur Steuerung und Korrektur seiner Flugbahn aufweisen. Ferner kann der Schleudersitz mit einem Thermometer zur Messung der Umgebungstemperatur sowie mit einem Sauerstoffgerät zur Erfassung des Sauerstoffgehaltes der Umgebungsluft versehen sein.

Die in der vorstehenden Beschreibung, den Patentansprüchen, und der Zusammenfassung offenbarten Merkmale des Gegenstandes dieser Unterlagen können einzeln als auch in beliebigen Kombinationen untereinander für die Verwirklichung der Erfindung in ihren verschiedenen Ausführungsformen wesentlich sein.

## Patentansprüche

1. Verfahren zur Rettung einer auf einem im Notfall aus einem Flugzeug ausgestoßenen Schleudersitz sitzenden Person, wobei in Abhängigkeit von mittels am Schleudersitz angeordneter Meßvorrichtungen erfaßten Daten von einer Steuereinrichtung das Entfalten von am Schleudersitz angebrachten Stabilisierungs- und/oder Bremsschirmen sowie eine Trennung der Person vom Schleudersitz eingeleitet wird, dadurch gekennzeichnet, daß während der zwischen Flugzeug und Schleudersitz bestehenden Verbindung die aktuellen Flugdaten des Flugzeuges über einen Datenbus in einen am Schleudersitz befindlichen Schleudersitz-Rechner eingespeist und nach der Trennung des Schleudersitzes vom Flugzeug von einer am Schleudersitz angebrachten Navigationsplattform die Bewegungsdaten des Schleudersitzes im Luftraum erfaßt und dem Schleudersitz-Rechner zugeleitet werden, und daß in dem Schleudersitz-Rechner ausgehend von den Fluglage-Daten des Flugzeuges zum Zeitpunkt der Trennung des Schleudersitzes die Flugdaten des Schleudersitzes berechnet und bei Erreichen vorgegebener Grenzwerte die Entfaltung der Stabilisierungs- und/oder der Bremsschirme und/oder die Sitz/Mann-Trennung eingeleitet wird.

2. Verfahren nach Anspruch 1, dadurch gekennzeichnet, daß als Flugdaten des Flugzeuges dessen Lage im Luftraum, die effektive Höhe über dem Erdboden und die Geschwindigkeit in den Schleudersitz-Rechner eingespeist werden.

3. Verfahren nach Anspruch 2, dadurch gekennzeichnet, daß als Flugdaten des Flugzeuges die Windgeschwindigkeit in dem Schleudersitz-Rechner eingespeist wird.

4. Verfahren nach einem der Ansprüche 1 bis 3, dadurch gekennzeichnet, daß mittels der Navigationsplattform des Schleudersitzes dessen Bewegung und Lageänderung im Raum sowie dessen Beschleunigungen ermittelt und in den Schleudersitz-Rechner eingespeist werden.

5. Verfahren nach einem der Ansprüche 1 bis 4, dadurch gekennzeichnet, daß während des Fluges des Schleudersitzes die Umgebungstemperatur erfaßt und die gemessene Temperaturwerte dem Schleudersitz-Rechner zugeleitet und bei der Steuerung der Rettungssequenz berücksichtigt werden.

6. Verfahren nach einem der Ansprüche 1 bis 5, dadurch gekennzeichnet, daß während des Fluges des Schleudersitzes der Sauerstoffgehalt der Umgebungsluft erfaßt und die gemessenen Werte dem Schleudersitz-Rechner zugeleitet und bei der Steuerung der Rettungssequenz berücksichtigt werden.

7. Verfahren nach einem der Ansprüche 1 bis 6, dadurch gekennzeichnet, daß die im Rechner des Flugzeuges vorgehaltenen, das geografische Fluggebiet betreffenden Kartendaten in den Schleudersitz-Rechner eingespeist und bei einer Berechnung des Zeitpunktes für die und die Steuerung der Entfaltung der Stabilisierungs- und/oder der Bremsschirme und/oder der Sitz/Mann-Trennung berücksichtigt werden.

8. Verfahren nach Anspruch 7, dadurch gekennzeichnet, daß als Flugdaten des Flugzeuges dessen Geschwindigkeit über Boden in den Schleudersitz-Rechner eingespeist wird.

9. Verfahren nach einem der Ansprüche 1 bis 8, dadurch gekennzeichnet, daß die Flugbahn des Schleudersitzes im Raum auf der Basis der aus dem Flugzeug übernommenen Flugdaten des Flugzeuges und der von der Navigationsplattform ermittelten Daten vorausberechnet und der Zeitpunkt für die Entfaltung der Stabilisierungs- und/oder der Bremsschirme und/oder der Sitz/Mann-Trennung berechnet wird.

10. Verfahren nach einem der Ansprüche 1 bis 9, dadurch gekennzeichnet, daß der Schleudersitz-Rechner in Abhängigkeit von den in ihm vorliegenden Flugdaten des Flugzeuges den Ausschuß des Schleudersitzes nach Stärke des Ausschußimpulses und/oder nach Richtung des Ausschusses steuert.

11. Verfahren nach einem der Ansprüche 1 bis 10, dadurch gekennzeichnet, daß in Abhängigkeit von den vom Schleudersitz-Rechner berechneten Flugdaten des Schleudersitzes über an dem Schleudersitz angebrachte Antriebssysteme eine Korrektur der Flugbahn des Schleudersitzes nach dem Ausschuß vorgenommen wird.

12. Schleudersitz zur Durchführung des Verfahrens nach einem der Ansprüche 1 bis 11, dadurch gekennzeichnet, daß der Schleudersitz mit einem Rechner und während seiner Verbindung mit dem Flugzeug ein an den Flugrechner angeschlossenen Datenbus sowie eine Navigationsplattform aufweist.

13. Schleudersitz nach Anspruch 12, dadurch gekennzeichnet, daß die Navigationsplattform als inertiale Meßeinrichtung ausgebildet ist.

14. Schleudersitz nach Anspruch 12 oder 13, dadurch gekennzeichnet, daß der Schleudersitz mit Schubdüsen zur Korrektur seiner Flugbahn versehen ist.

15. Schleudersitz nach einem der Ansprüche 12 bis 14, dadurch gekennzeichnet, daß der Schleudersitz mit einem Thermometer zur Messung der Umgebungstemperatur versehen ist.

16. Schleudersitz nach einem der Ansprüche 12 bis 15, dadurch gekennzeichnet, daß der Schleudersitz mit einem Sauerstoffmeßgerät versehen ist.
